# EUROPEAN PATENT APPLICATION

(11) **EP 4 734 349 A1**
(43) Date of publication of application: **29.04.2026**
(21) Application number: 24208981.1
(22) Date of filing: 25.10.2024
(51) Int. Cl.: H02M 5/458, H02M 7/483

(54) **CONVERTER SYSTEM FOR CONNECTING FIRST AC SYSTEM TO SECOND AC SYSTEM AND METHOD THEREOF**

(71) Applicant: Hitachi Energy Ltd, 8050 Zürich (CH)
(72) Inventor: STEINKE, Juergen Kurt, 79774 Albbruck (DE); HEINIG, Stefanie, 4053 Basel (CH)
(74) Representative: Zacco Sweden AB

(57) **Abstract**

Embodiments of present disclosure provide converter system and method connecting first AC system to second AC system. First converter comprises first phase legs arranged by cascading first sub-converters between two DC lines connected to terminals of DC links. Connections of first sub-converters form AC connection terminals and first phase legs are arranged as first phase-arms in sub-converters. Second converter comprises second phase legs arranged by cascading sub-converters, between two DC lines connected to terminals of DC links. Connections of sub-converters form AC connection terminals and second phase legs are arranged second phase-arms in the cascaded sub-converters. First converter or second converter operates rectifier or converter. First phase legs or second phase legs comprises bipolar cell in each phase to control potential difference between DC links. Potential difference between DC links and output voltage of the inverter is changed by value of voltage blocked by bipolar cell.

## Description

### TECHNICAL FIELD

The present disclosure relates generally to a field of power conversion system. More particularly, it is related to a converter system for connecting AC systems.

### BACKGROUND

Back-to-back Modular multilevel (MMC) converters/arrangement or cascaded converters generally consists of two sub-AC/DC-converters coupled via the DC terminals. Multilevel or back-to-back converters have brought significant improvements over two- or three-level voltage source converter (VSC). In this back-to-back MMC arrangement, one MMC is used as a front-end converter to accept AC and generate regulated DC at its output. Another MMC in the back-to-back converters is cascaded with the front-end converter to convert the DC again to AC. Such cascaded converters are typically used to couple two networks or loads operated at equal or similar frequencies.

The MMC is composed of many identical controlled voltage sources called modules or cells. Considering that the DC terminal interconnection between the two MMC's is within an installation location of the cascaded converters, a probability of a DC short in such cascaded converters becomes low. Therefore, the two sub-converters in both the converters may be equipped with unipolar voltage output (unipolar cells).

In industrial products, for example in power transmission products, the MMC cells are used as standardized units to provide a required voltage blocking capability that may result in a maximum phase current capability. In an example, when the cascaded MMC is used, the MMC connected to a fixed voltage side is a single-phase network and the MMC connected to other side a three-phase network, a three-phase sub-converter (in the MMC) composed of same cell units.

In another example, when the cascaded MMC are used in a network to supply a desired high power, the MMC connected to the one of a voltage side may supply a multi-phase AC load only requiring real power exchange, while the sub-converter connecting via another AC voltage connected to another multi- phase network may have substantial requirements for delivering apparent power into the network. In such case of power requirement, a higher number of cells are required in one or more of the MMCs configured in the back-to-back MMC arrangement. Such requirement of higher number of cells in the MMC may not be a cost-effective solution.

Furthermore, when the back-to-back converters are at a lower power end of a product application range, where the product costs are very critical, an optimization of number of cells in the MMC may be much desired.

### SUMMARY

Consequently, there is a need for an improved converter system for connecting two AC systems. The proposed converter system is configured to optimize number of cells in sub-converters configured in the converter system.

It is therefore an object of the present disclosure to provide a converter system and a method for connecting a first AC system to a second AC system, which mitigate, alleviate, or eliminate all or at least some of the above-discussed drawbacks of presently known solutions.

This and other objects are achieved by means of the converter system and method for connecting a first AC system to a second AC system, as defined in the appended claims. The term exemplary is in the present context to be understood as serving as an instance, example or illustration.

According to a first aspect of the present disclosure, there is provided a converter system for connecting a first AC system to a second AC system. The converter system comprises of a first converter comprising a plurality of first phase legs arranged by cascading two first sub-converters between two DC lines that are correspondingly connected to first end terminals of DC links. Connections of the two first sub-converters form AC connection terminals and the plurality of first phase legs are arranged as first phase-arms in the cascaded two first sub-converters. The converter system (100) further comprises a second converter comprising a plurality of second phase legs arranged by cascading two second sub-converters, between two DC lines that are correspondingly connected to second end terminals of the DC links. Connections of the two second sub-converters form AC connection terminals and the plurality of second phase legs are arranged as second phase-arms in the cascaded two second sub-converters. The one of the first converter or the second converter is configured to operate as a rectifier and the other converter of the first converter or the second converter is configured to operate as an inverter. The plurality of first phase legs of the first converter or the plurality of second phase legs of the second converter comprises at least one bipolar cell in each of the phase-arms of the first converter or each of the phase-arms of the second converter, operated during an operation of the converter system and controls a potential difference between the DC links. At least one of: the potential difference between the DC links and an output voltage of one of the first converter or the second converter configured to operate as the inverter is changed by a value of voltage blocked by the at least one bipolar cell.

In some embodiments, the at least one bi-polar cell is configured to control the potential difference between the DC links such that the potential difference between the DC links is lower than a maximum rectified value to be obtained from the rectifier by rectifying the AC voltage at the AC terminals.

In some embodiments, the at least one bi-polar cell is configured to increase the output voltage of the inverter to more than an expected output voltage to be converted from DC to AC by the inverter.

In some embodiments, the other converter from the first converter or the second converter comprises a set of unipolar cells when one of the first converter or the second converter comprises the at least one bipolar cell.

With proposed embodiment, using bipolar cells in one of the first converter or the second converter results in cost reduction compared to the half-bridge cell or unipolar cell only design for the first converter or the second converter in the converter system.

With the bipolar cell, there is a reduction in total number of cells in the converter system which may result in reduction in footprint.

In some embodiments, a first AC network connected to the first converter and a second AC network connected to the second converter (120) are arranged to operate at one of: equal frequencies or with a frequency deviation in a range of - 40% to + 40%.

In some embodiments, the two first sub-converters are coupled to the first AC network through a plurality of AC filters and the other end terminals of the two first sub-converters are correspondingly connected to first end terminals of the DC links. The two second sub-converters are coupled to the second AC network through a plurality of AC filters and the other end terminals of the two second sub-converters are correspondingly connected to second end terminal of the DC links.

In some embodiments, the one of the first converter or the second converter is connected to an AC energy source that includes a power grid, or an AC machine comprising a generator, and the other converter of the first converter or the second converter is connected to a load including a motor or the power grid.

In some embodiments, the first converter is connected to a first power grid and the second converter is connected to a second power grid.

In some embodiments, the first AC system comprises an AC network configured to operate as the AC energy source, or AC network of load, and wherein the second AC system comprises the AC machine configurable to operate as the motor.

In some embodiments, one of the first converter or the second converter is connected to higher AC voltage of a first AC voltage at the AC terminals or a second AC voltage at the AC terminals and is connected to one of a single-phase AC network or a three-phase AC network. The other converter of the first converter or the second converter is connected to a lower AC voltage of the first AC voltage or the second AC voltage and is connected to the three-phase AC network. The single-phase AC network comprises two first phase legs.

In some embodiments, the first converter or the second converter connected to the lower voltage is connected to the three-phase AC machine, and the first converter or the second converter connected to the higher AC voltage is connected to a three-phase distribution or transmission network.

In some embodiments, the first converter and the second converter are placed in a same substation.

According to a second aspect of the present disclosure, there is provided a method for connecting a first AC system to a second AC system. The method comprises arranging, a first converter comprising a plurality of first phase legs. The arranging further comprises cascading two first sub-converters between two DC lines that are correspondingly connected to first end terminals of DC links. Connections of the two first sub-converters form AC connection terminals. The plurality of first phase legs are arranged as first phase-arms in the cascaded two first sub-converters. The method further comprises arranging a second converter comprising a plurality of second phase legs. The arranging comprises of cascading two second sub-converters between two DC lines that are correspondingly connected to second end terminals of the DC links. Connections of the two second sub-converters form AC connection terminals. The plurality of second phase legs is arranged as second phase-arms in the cascaded two second sub-converters. The method further comprises configuring, one of the first converter or the second converter to operate as a rectifier and configuring the other converter of the first converter or the second converter to operate as an inverter. The method further comprises operating, at least one bipolar cell configured in each of the phase-arms of the first converter or each phase-arms of the second converter of the plurality of first phase legs of the first converter or the plurality of second phase legs of the second converter during an operation of the converter system to control a potential difference between the DC links. At least one of: the potential difference between the DC links and an output voltage of one of the first converter or the second converter configured to operate as the inverter is changed by a value of voltage blocked by the at least one bipolar cell.

According to a third aspect, there is provided a computer-readable storage medium storing computer program instructions which, when executed by a processor, cause the processor to perform the method for connecting a first AC system to a second AC system.

Replacing one or more unipolar cells per arm by bi-polar cells in the sub-converter with a higher phase load allows to reduce the DC coupling voltage.

In each cell per arm in the single-phase converter turned from the unipolar cell into the bi-polar cell, one unipolar cell per arm equipped in the three-phase converter can be reduced. Such reduction in unipolar cells may result in reduction in total number of semiconductors in the converter thus reducing a cost of the converter system.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1A discloses a block diagram of a converter system for connecting a first AC system to a second AC system according to some embodiments;
FIG. 2 discloses a topology of the converter system with a three-phase AC network and a single-phase AC network connected to respective converters according to some embodiments;
FIG. 3 discloses an alter topology of the converter system with two back-to-back converters connected to respective three-phase AC network according to some embodiments; and
FIG. 4 shows a flowchart illustrating example steps for a method for connecting the first AC system to the second AC system according to some embodiments.

### DETAILED DESCRIPTION

Aspects of the present disclosure will be described more fully hereinafter with reference to the accompanying drawings. The enclosure disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.

In the following description of exemplary embodiments, the same reference numerals denote the same or similar components.

In prior art, when the cascaded MMC is used, the MMC connected to a fixed voltage side is a single-phase network and the MMC connected to other side a three-phase network, a three-phase sub-converter (in the MMC) composed of same cell units, for example, unipolar cells may provide 173% of the power compared to the single-phase side. In order to obtain a desired power output through the cascaded MMC, a free AC voltage may be selected to about 58% of the fixed AC voltage, but due to the fixed DC connection voltage, the number of cells required in the three-phase converter may only be reduced by about 20%.

In another prior art example, when the cascaded MMC are used in a network to supply a desired high power, the MMC connected to the one of a voltage side may supply a multi-phase AC load only requiring real power exchange, while the sub-converter connecting via another AC voltage connected to another multi- phase network may have substantial requirements for delivering apparent power into the network. In such case of power requirement, more number of cells are required in one or more of the MMCs configured in the back-to-back MMC arrangement. Such requirement of more number of cells in the MMC may not be a cost effective solution.

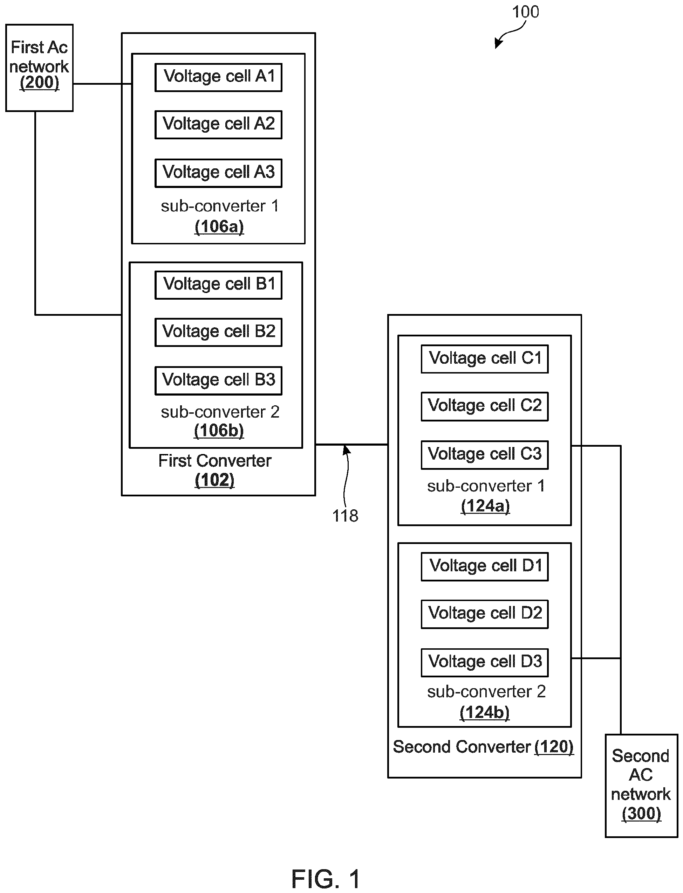

FIG. 1 discloses a block diagram of a converter system (100) for connecting a first AC system (200) (also referred as first AC network) to a second AC system (300) (also referred as second AC network). The first AC network (200) is connected to a first converter (102) that comprises of two first sub-converters (106a, 106b) each comprising one or more voltage cells (A1 up to A3, B1 up to B3). The first converter (102) is connected to a second converter (120) connected to the second AC system (300) through a DC link (118). The second converter (120) comprises of two second sub-converters (124a, 124b) each comprising one or more voltage cells (C1 up to C3, D1 up to D3)

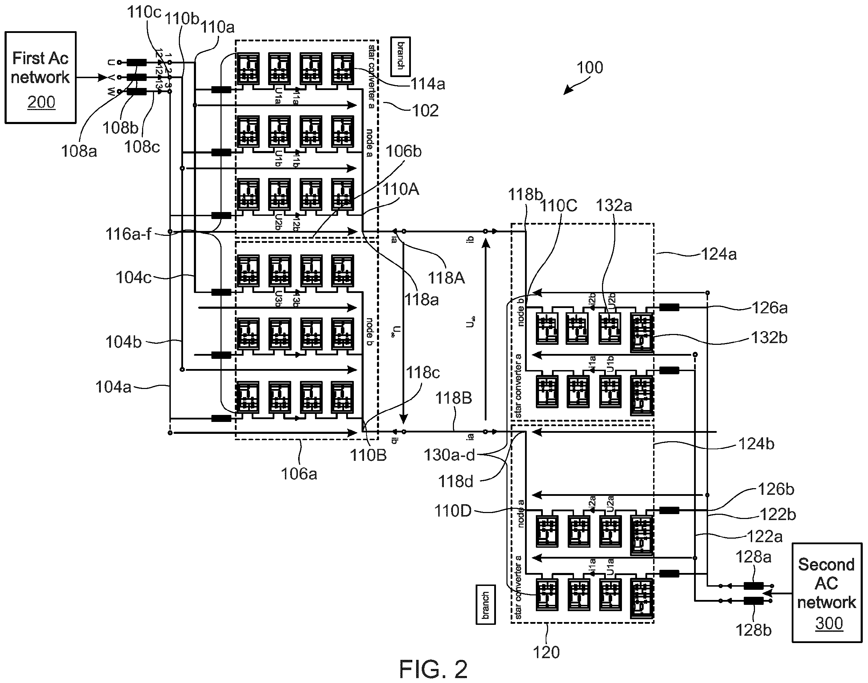

FIG. 2A discloses a topology illustration of the converter system (100) for connecting the first AC system (200) to the second AC system (300). The converter system (100) comprises of the first converter (102) comprising a plurality of first phase legs (104a up to 104c) arranged by cascading the two first sub-converters (106a, 106b) between two DC lines (110A, 110B) that are correspondingly connected to first end terminals (118a, 118c) of DC links (118A, 118B).

The connections of the two first sub-converters (106a, 106b) form AC connection terminals (110a up to 110c). The plurality of first phase legs (104a up to 104c) are arranged as first phase-arms (116a up to 116f) in the cascaded two first sub-converters (106a, 106b).

The converter system (100) further comprises a second converter (120) comprising a plurality of second phase legs (122a up to 122c) arranged by cascading two second sub-converters (124a, 124b), between two DC lines (110C, 110D) that are correspondingly connected to second end terminals (118b, 118d) of the DC links (118A, 118B). The connections of the two second sub-converters (124a, 124b) form AC connection terminals (126a up to 126c). The plurality of second phase legs (122a up to 122c) are arranged as second phase-arms (130a-up to 130f) in the cascaded two second sub-converters (124a, 124b).

One of the first converter (102) or the second converter (120) is configured to operate as a rectifier and other converter from the first converter or the second converter (120) is configured to operate as an inverter. The plurality of first phase legs (104a up to 104c) of the first converter (102) or the plurality of second phase legs (122a up to 122c) of the second converter (120) comprises at least one bipolar cell (132b) in each of the phase-arms (116a up to 116f, 130a-130f) operated during an operation of the converter system (100) to control a potential difference between the DC links (118A, 118B). The potential difference between the DC links (118A, 118B) (also referred as DC link voltage) is controlled such that at least one of: the potential difference between the DC links (118A, 118B) and an output voltage of one of the first converter (102) or the second converter (120) configured to operate as the inverter is changed by a value of voltage blocked by the at least one bipolar cell (132b).

In an example, one of the first converter (102) or the second converter (120) configured to operate as the rectifier converts AC power from one of the AC sources or loads to DC power in the converter system (100) also referred as forward conversion. The other converter of the first converter (102) or the second converter configured to operate as the inverter converts DC power to power for another source or load also referred as reverse conversion.

In an embodiment, the at least one bi-polar cell (132b) is configured to control the potential difference between the DC links (118A, 118B) such that the potential difference between the DC links (118A, 118B) is lower than a maximum rectified value to be obtained from the rectifier by rectifying the AC voltage at the AC terminals (108a-108c, 126a-126c).

In an embodiment, the at least one bi-polar cell (132b) is configured to increase the output voltage of the inverter (the first converter (102) or the second converter (120)) to more than an expected output to be converted from DC to AC by the inverter.

In an embodiment, the other converter from the first converter (102) or the second converter (120) configured as the inverter comprises a set of unipolar cells (114a, 132a) when one of the first converter (102) or the second converter (120) comprises the at least one bipolar cell (132b).

In an example, the set of unipolar cells (114a, 132a) comprise Half-bridge cells and the at least one bipolar cell (132b) comprise a Full-bridge cell.

In an embodiment, the first AC network (200) and the second network (300) are arranged to operate at one of: equal frequencies or with a frequency deviation in a range of - 40% to + 40%.

In an embodiment, the two first sub-converters (106-a up to 106-b) are coupled to the first AC system (200) through a plurality of AC filters (108a up to 108c) and the other end terminals (110A, 110B) of the two first sub-converters (106a, 106b) are correspondingly connected to first end terminals (118a, 118c) of the DC links (118A, 118B). The second sub-converters (124a, 124b) are coupled to the second AC system (300) through a plurality of AC filters (128a, up to 128c) and the other end terminals (110C, 110D) of the two second sub-converters (124a, 124b) are correspondingly connected to second end terminal (118b, 118d) of DC links (118A, 118B).

In an embodiment, the one of the first converter (102) or the second converter (120) is connected to an AC energy source that includes a power grid, or an AC machine comprising a generator, and the other converter of the first converter (102) or the second converter is connected to a load including a motor or the power grid. The first converter (102) and the second converter (120) may also enable a bi-directional power flow between the first AC system (200) and the second AC system (300) by enabling simultaneous rectification and inversion in the conversion system (100).

In an embodiment, the first converter (102) is connected to a first power grid and the second converter (120) is connected to a second power grid in a multi-microgrid system. One of the first grid or the second grid comprise a main grid and other grid of the first grid or the second grid comprise a local microgrid. The first converter (102) and the second converter (120) enable power transfer from one of the first grid or the grid to other grid of the first grid or the second grid.

In an embodiment, the first AC system (200) comprises an AC network configured to operate as the AC energy source, or AC network of load, and the second AC system (300) comprises the AC machine configurable to operate as the motor.

In an embodiment, one of the first converter (102) or the second converter (120) is connected to higher AC voltage of a first AC voltage at the AC terminals (110a up to 110c) or a second AC voltage at the AC terminals (126a up to 126c) and is connected to one of a single-phase AC network or a three-phase AC network. The other converter of the first converter (102) or the second converter (120) is connected to a lower AC voltage of the first AC voltage or the second AC voltage and is connected to the three-phase AC network. The single-phase AC network comprises two first phase legs (104a, 104b, 122a, 122b).

In an embodiment, the first converter (102) or the second converter (120) connected to the lower voltage is connected to the three-phase AC machine and the first converter (102) or the second converter (120) connected to the higher AC voltage is connected to a three-phase distribution or transmission network.

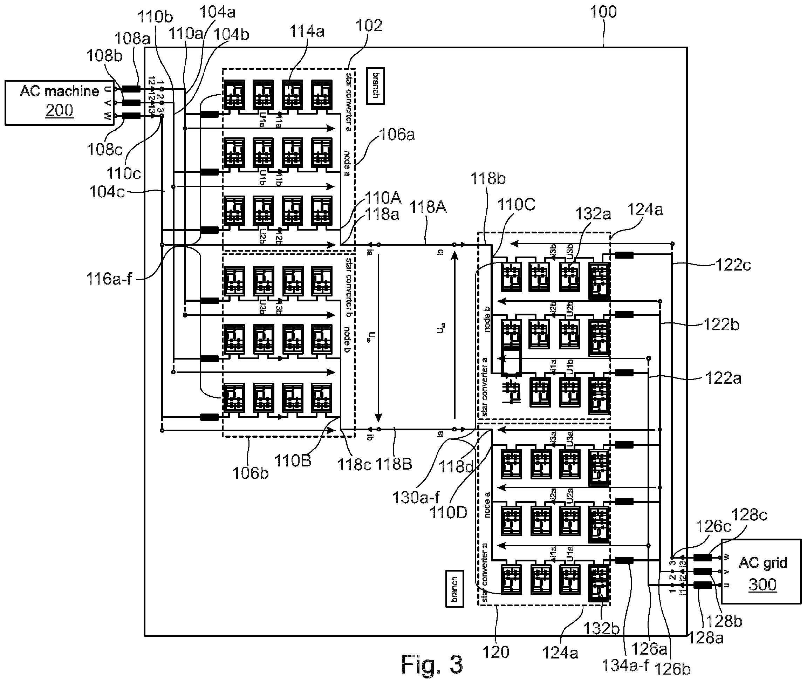

In an example, FIG. 3 illustrates the converter system 100 with the two first sub-converters (106-a, 106-b) of the first converter (102) connected to the first AC system (200) comprising the three-phase AC network and the second sub-converters (124a, 124b) of the second converter (120) are connected to the second AC network (300) also comprising the three-phase AC network.

As shown in FIG. 3, an application example of the converter system (100) may comprise a variable speed hydro generator (or referred as generator) for pumped storage. The converter system (100) is coupled to the public grid (300) with frequencies of the AC voltages on two sides of two converters (102, 120) including steady state operation with equal frequencies. The generator may be operated in one of a pumping mode and/or in generating mode.

While the AC machine (200) may be designed to exchange only active power with the first converter (102), the AC grid (300) may have additional requirement for a high amount of reactive power, which may increase an apparent power exchanged between the grid (300) and second converter (120). While the generator voltage is limited, and high currents are preferred over high voltages, the apparent power of the grid side converter (120) may be increased over that of the machine side converter (102) by increasing the grid side Ac voltage. The increase of the grid side AC voltage (second AC voltage) above the machine voltage (first AC voltage) while keeping the DC link voltage at a lowest reasonable value i.e., a value lower than the peak-to-peak AC voltage of the converter system (100) may be enabled by adding the bi-polar cells (132b) to each of the grid side converter (120).

Replacing one or more unipolar cells in each of the phase-arm (130a up to 130f) with bi-polar cells (132b) in the grid side converter (120) with a higher phase load allows to reduce the DC coupling voltage.

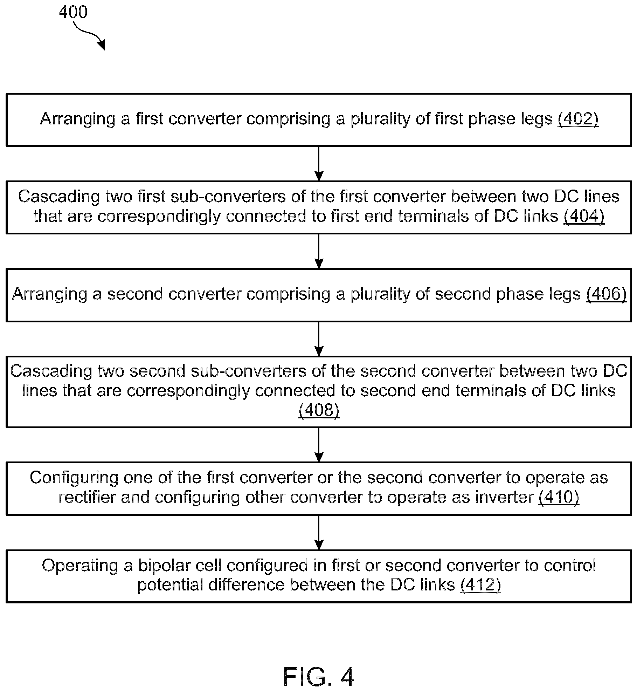

Referring to FIG. 4, a flow diagram showing steps for a method (400) for connecting the first AC system (200) to the second AC system (300) is shown. The method (400) at step (402) comprises of arranging the first converter (102) comprising the plurality of first phase legs (104a up to 104c). The arranging comprises cascading, at step (404) two first sub-converters (106a, 106b) between two DC lines (110A, 110B) that are correspondingly connected to first end terminals (118a, 118c) of DC links (118A, 118B). The connections of the two first sub-converters (106a, 106b) form AC connection terminals (110a up to 110c). The plurality of first phase legs (104a up to 104c) are arranged as first phase-arms (116a-116f) in the cascaded two first sub-converters (106a, 106b).

At step (406) the method (400) comprises arranging the second converter (120) comprising the plurality of second phase legs (122a up to, 122c). The arranging comprises cascading, at step (408), the two second sub-converters (124a, 124b), between two DC lines (110C, 110D) that are correspondingly connected to second end terminals (118b, 118d) of the DC links (118A, 118B). The connections of the two second sub-converters (124a, 124b) form AC connection terminals (126a up to 126c). The plurality of second phase legs (122a up to 122c) are arranged as second phase-arms (130a-130f) in the cascaded two second sub-converters (124a, 124b).

At step (410), the method (400) comprises configuring, one of the first converter (102) or the second converter (120) to operate as a rectifier and configuring the other converter of the first converter or the second converter (120) to operate as an inverter.

At step (410) the method (400) comprises operating, the at least one bipolar cell (132b) configured in each of the phase-arms (116a up to 116f) of the first converter (102) or each of the phase-arms (130a up to 130f) of the second converter, of the plurality of first phase legs (104a, 104b, 104c) of the first converter (102) or the plurality of second phase legs (122a, 122b, 122c) of the second converter (120) during an operation of the converter system (100) to control the potential difference between the DC links (118A, 118B). The potential difference between the DC links (118A, 118B) is controlled such that at least one of: the potential difference between the DC links (118A, 118B) and the output voltage of one of the first converter (102) or the second converter (120) configured to operate as the inverter is changed by the value of voltage blocked by the at least one bipolar cell (132b).

Details of the method (400) are similar to the details of the converter system (100) and hence are not repeated for the sake of brevity.

In an example, referring to FIG. 2, in case the first AC voltage is set equal to the second AC voltage, and number of cells (with all unipolar cells (114a, 132a) in both the first converter (102) and the second converter (120)) are set as 100%, wherein 40% of the cells are in the second converter (120), which is the single-phase converter and 60% of the cells are in the first converter (102) which is the three-phase converter, the number of cells with this proposed selection of the number of cells may be reduced to 85%.

Furthermore, when the 3-phase AC voltage is reduced to half of the single-phase AC voltage, and when the voltage of the DC link (118A, 118b) is reduced to 50%, this may reduce the number of cells in the 3-phase AC converter by 50% and the number of cells in the single-phase converter by 75%. Thus, the total number of cells may be reduced by 60%. However, to achieve this total number of cell reduction to 60%, and considering the peak-to-peak single-phase AC voltage is higher than the voltage of the DC link (118A, 118B), 1/3^{rd} of number of cells in each phase-arm (130a up to 130f) of the single-phase converter (120) need to be configured as the full-bridge cells as there is an increment in the current flowing through the cells (114a, 132a) in the single-phase converter (120).

Now, if the bi-polar cells (132b) are included in each phase-arm (130a up to 130f) of each of the sub-converter (124a, 124b) of the second converter (120), the voltage of the DC link (118A, 118B) may become lower than the perk-to-peak AC voltage.

In an example, reducing the total number of cells is correlated to reducing footprint and cost and such correlation is not a linear correlation as for a certain cell voltage class, as only 4 nominal cell current ratings are available. And since current loads in the single-phase and the three-phase side converter are different, cell current ratings on both side converters (first converter (102) or the second converter (120) may be different for possible choices of the DC-link voltage that may be manually selected.

In an example, a procedure for designing the converter system (100) is now discussed. The DC-link voltage may be varied by selecting a low value voltage, for example, 5kV to a higher value of voltage for example, 70kV. Over this range of varied DC link voltage, configuration and design of the 3-phase converter (for example the first converter (102)) and the single-phase converter (for example the second converter (120)) may be performed to determine the cost of each design of the converter system (100).

In an example, rail B2B 50 Hz may be considered as a reference case. A mixed cell topology for a rail side converter, i.e., the topology with the mix of half-bridge and full-bridge cells, may result in:
- At least 15% cost reduction compared to the half-bridge cell only design for the first converter (102) or the second converter (120) in the converter system (100)
- A reduction of the total number of cells between a range of 25% and 40% in the converter system (100) which may result in reduction in footprint

Replacing one or more unipolar cells (114a, 132a) per arm (116a up to 116f, 130a up to 130f) in the first converter (102) or the second converter (120) by at least one bi-polar cell (132b) in the first two sub-converters (106a, 106b) or the second two sub-converters (124a, 124b) with a higher phase load allows to reduce the DC coupling voltage or the DC link voltage.

In each cell per arm in the single-phase converter turned from the unipolar cell (114a, 132a) into the bi-polar cell (132b), one unipolar cell (114a, 132a) per arm (116a up to 116f, 130a up to 130f) equipped in the three-phase converter (the first converter (102) or the second converter (120)) may be reduced. Such reduction in the unipolar cells (114a, 132a) may result in reduction in total number of semiconductors in the first converter (102) or the second converter (120) thus reducing a cost of the converter system (100).

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A converter system (100) for connecting a first AC system (200) to a second AC system (300), the converter system (100) comprising:
a first converter (102) comprising a plurality of first phase legs (104a up to 104c) arranged by cascading two first sub-converters (106a, 106b) between two DC lines (110A, 110B) that are correspondingly connected to first end terminals (118a, 118c) of DC links (118A, 118B), wherein connections of the two first sub-converters (106a, 106b) form AC connection terminals (110a, up to 110c), wherein the plurality of first phase legs (104a up to 104c) are arranged as first phase-arms (116a up to 116f) in the cascaded two first sub-converters (106a, 106b); and
a second converter (120) comprising a plurality of second phase legs (122a up to 122c) arranged by cascading two second sub-converters (124a, 124b), between two DC lines (110C, 110D) that are correspondingly connected to second end terminals (118b, 118d) of the DC links (118A, 118B), wherein connections of the two second sub-converters (124a, 124b) form AC connection terminals (126a, up to 126c), wherein the plurality of second phase legs (122a up to 122c) are arranged as second phase-arms (130a up to130f) in the cascaded two second sub-converters (124a, 124b);
wherein one of the first converter (102) or the second converter (120) is configured to operate as a rectifier and the other converter of the first converter or the second converter (120) is configured to operate as an inverter, and
wherein the plurality of first phase legs (104a up to 104c) of the first converter (102) or the plurality of second phase legs (122a up to 122c) of the second converter (120) comprises at least one bipolar cell (132b) in each of the phase-arms (116a up to 116f) of the first converter (102) or each of the phase-arms (130a up to130f) of the second converter (120), operated during an operation of the converter system (100) controls a potential difference between the DC links (118A, 118B), wherein at least one of: the potential difference between the DC links (118A, 118B) and an output voltage of one of the first converter (102) or the second converter (120) configured to operate as the inverter is changed by a value of voltage blocked by the at least one bipolar cell ( 132b).

2. The converter system (100) according to claim 1, wherein the at least one bi-polar cell (132b) is configured to control the potential difference between the DC links (118A, 118B) such that the potential difference between the DC links (118A, 118B) is lower than a maximum rectified value to be obtained from the rectifier by rectifying the AC voltage at the AC terminals (108a-108c, 126a-126c).

3. The converter system (100) according to claim 1, wherein the at least one bi-polar cell (132b) is configured to increase the output voltage of the inverter to more than an expected output voltage to be converted from DC to AC by the inverter.

4. The converter system (100) according to any of the preceding claims, wherein the other converter from the first converter (102) or the second converter (120) comprises a set of unipolar cells (114a, 132a) when one of the first converter (102) or the second converter (120) comprises the at least one bipolar cell (132b).

5. The converter system (100) according to any of the preceding claims, wherein the first AC system (200) connected to the first converter (102) and the second system (300) connected to the second converter (120) are arranged to operate at one of: equal frequencies or with a frequency deviation in a range of - 40% to + 40%.

6. The converter system (100) according to any of the preceding claims, wherein the two first sub-converters (106-a, 106-b) are coupled to a first AC system (200) through a plurality of AC filters (108a up to 108c) and the other end terminals (110A, 110B) of the two first sub-converters (106a, 106b) are correspondingly connected to first end terminals (118a, 118c) of the DC links (118A, 118B), and
wherein the two second sub-converters (124a, 124b) are coupled to a second AC system (300) through a plurality of AC filters (128a up to 128c) and the other end terminals (110C, 110D) of the two second sub-converters (124a, 124b) are correspondingly connected to second end terminal (118b, 118d) of DC links (118A, 118B).

7. The converter system (100) according to any of the preceding claims, wherein the one of the first converter (102) or the second converter (120) is connected to an AC energy source that includes a power grid, or an AC machine comprising a generator, and wherein the other converter of the first converter (102) or the second converter (120) is connected to a load including a motor or the power grid.

8. The converter system (100) according to any of the preceding claims, wherein the first converter (102) is connected to a first power grid and the second converter (120) is connected to a second power grid.

9. The converter system (100) according to any of the preceding claims, wherein the first AC system (200) comprises an AC network configured to operate as the AC energy source, or AC network of load, and wherein the second AC system (300) comprises the AC machine configurable to operate as the motor.

10. The converter system (100) according to any of the preceding claims, wherein one of the first converter (102) or the second converter (120) is connected to higher AC voltage of a first AC voltage at the AC terminals (110a up to 110c) or a second AC voltage at the AC terminals (126a up to 126c) and is connected to one of a single-phase AC network or a three-phase AC network, and wherein the other converter of the first converter (102) or the second converter (120) is connected to a lower AC voltage of the first AC voltage or the second AC voltage and connected to the three-phase AC network,
wherein the single-phase AC network comprises two first phase legs (104a, 104b, 122a, 122b).

11. The converter system (100) according to any of the preceding claims, wherein the first converter (102) or the second converter (120) connected to the lower voltage is connected to the three-phase AC machine, and wherein the first converter (102) or the second converter (120) connected to the higher AC voltage is connected to a three-phase distribution or transmission network.

12. The converter system (100) according to any of the preceding claims, wherein the first converter (102) and the second converter (120) are placed in a same substation.

13. A method for connecting a first AC system (200) to a second AC system (300), the method comprising:
arranging, a first converter (102) comprising a plurality of first phase legs (104a up to 104c), wherein the arranging comprises:
cascading two first sub-converters (106a, 106b) between two DC lines (110A, 110B) that are correspondingly connected to first end terminals (118a, 118c) of DC links (118A, 118B), wherein connections of the two first sub-converters (106a, 106b) form AC connection terminals (110a up to 110c), wherein the plurality of first phase legs (104a up to 104c) are arranged as first phase-arms (116a up to 116f) in the cascaded two first sub-converters (106a, 106b);
arranging, a second converter (120) comprising a plurality of second phase legs (122a up to, 122c), wherein the arranging comprises:
cascading two second sub-converters (124a, 124b), between two DC lines (110C, 110D) that are correspondingly connected to second end terminals (118b, 118d) of the DC links (118A, 118B), wherein connections of the two second sub-converters (124a, 124b) form AC connection terminals (126a up to 126c), wherein the plurality of second phase legs (122a up to 122c) are arranged as second phase-arms (130a up to 130f) in the cascaded two second sub-converters (124a, 124b); and;
configuring, one of the first converter (102) or the second converter (120) to operate as a rectifier and configuring the other converter of the first converter or the second converter (120) to operate as an inverter,
operating, at least one bipolar cell (132b) configured in each of the phase-arms (116a up to 116f) of the first converter (102) or each phase-arms (130a up to 130f) of the second converter, of the plurality of first phase legs (104a up to 104c) of the first converter (102) or the plurality of second phase legs (122a up to 122c) of the second converter (120) during an operation of the converter system (100) to control a potential difference between the DC links (118A, 118B), wherein at least one of: the potential difference between the DC links (118A, 118B) and an output voltage of one of the first converter (102) or the second converter (120) configured to operate as the inverter is changed by a value of voltage blocked by the at least one bipolar cell (132b).

14. The method according to claim 13, comprising:
operating the at least one bi-polar cell (132b) to control the potential difference between the DC links (118A, 118B) such that the potential difference between the DC links (118A, 118B) is lower than a maximum rectified value to be obtained from the rectifier by rectifying the AC voltage at the AC terminals (110a up to 110c, 126a up to 126c).

15. A computer-readable storage medium storing computer program instructions which, when executed by a processor, cause the processor to perform a method as set out in at least one of claims 13 to 14.
